# FASCICULE DE BREVET EUROPEEN

(11) **EP 0 951 827 B1**
(45) Date de publication et mention de la délivrance du brevet: **17.12.2003**
(21) Numéro de dépôt: 99107797.5
(22) Date de dépôt: 20.04.1999
(51) Int. Cl.: A01K 97/02, A01K 95/00

(54) **Plomb de fond à chambre d'expulsion de la partie finale hameçon-appât**
Sinkblei mit Austreibkammer für Angelhaken mit Köder
Sinker with expulsion chambre for a fishhook with bait

(30) Priorité: 23.04.1998 IT VI980081
(43) Date de publication de la demande: 27.10.1999
(73) Titulaire: Franchin, Vitaliano, 36100 Vicenza (IT)
(72) Inventeur: Franchin, Vitaliano, 36100 Vicenza (IT)
(74) Mandataire: Bettello, Pietro, Dott. Ing.

(56) Documents cités:
- FR-A- 1 384 826
- GB-A- 2 194 721
- GB-A- 2 255 485
- US-A- 3 643 368
- US-A- 4 023 300

## Description

L'invention concerne la réalisation d'un plomb de fond à utiliser sur une canne à pêche, selon la partie generale de la revendication 1.

Il est bien connu des pêcheurs que, dans la pêche de fond, les montures qui emploient un plomb relié d'un côté à la ligne-mère et de l'autre à l'hameçon, avec interposition de l'émerillon, présentent certains inconvénients. En effet, au moment du lancer, tant par le frottement de l'air que par l'impact avec l'eau, la partie finale de l'hameçon tend à s'emmêler elle-même, en rendant donc impossible la prise en bouche de l'hameçon.

Dans le document US-A-3643368 est déja connu un plomb de fond à utiliser sur des cannes à pêche qui comprend un récipient lesté apte à recevoir une extrémité d'un hameçon-appat et qui prevoit des moyens permettant l'ouverture automatique dudit récipient une fois le plomb immergé dans l'eau. En particulier les moyens permettant cette ouverture automatique sont constitués par la sable. But principal de l'invention est celui de réaliser un plomb de fond avec des caractéristiques améliorées en respect du document cité.

Un autre but de la présente invention est la réalisation d'un plomb de fond, qui permette à la partie finale hameçon-appât de se déposer au fond de la nappe d'eau de façon complètement détendue.

Un autre but est celui de réaliser un plomb de fond d'une construction simple et d'un coût minime.

Un dernier but est celui de réaliser un plomb de fond qui puisse être chargé rapidement et manuellement même par des pêcheurs inexpérimentés.

Ceci est réalisé grâce aux caractéristiques de la revendication 1.

On prévoit essentiellement que l'extrémité de l'hameçon-appât vienne se placer à l'intérieur d'un récipient lesté, lequel est susceptible de s'ouvrir de façon automatique seulement après que le plomb s'est immergé dans l'eau de quelques centimètres.

Le plomb est en outre muni, d'un dispositif d'expulsion automatique qui se charge, une fois que ledit récipient lesté s'est ouvert, d'expulser ladite partie terminale hameçon-appât, de manière que celle-ci sorte sans s'emmêler et aille donc se déposer régulièrement sur le fond, en permettant ainsi à l'appât d'être bien visible par la proie.

Selon une caractéristique de l'invention, le récipient lesté est muni d'une chambre, contenant la partie terminale hameçon-appât, tenue fermée par un couvercle qui est à son tour tenu en position de fermeture au moyen d'un accrochage hydrosoluble, de préférence d'un élément filiforme, lequel se détache, de préférence par rupture, immédiatement après que le plomb est immergé dans l'eau pour permettre audit hameçon-appât de sortir et de se déposer sur le fond.

Selon une autre caractéristique de l'invention, le dispositif d'expulsion automatique de la partie finale hameçon-appât de la chambre ménagée dans le récipient lesté est constitué par un poussoir, coulissant à l'intérieur de ladite chambre et placé en contact avec ledit hameçon-appât, ledit poussoir étant monté dans un état de précontrainte au moyen de l'action antagoniste d'un accrochage élastique, de préférence filiforme, ancré par une extrémité au corps dudit récipient et par l'autre extrémité au poussoir, de manière qu'à l'ouverture du couvercle précité, il puisse coulisser par réaction dans ladite chambre jusqu'à l'expulsion complète de l'hameçon-appât hors de celle-ci.

Afin de rendre plus claire la compréhension de la structure et des caractéristiques de la présente invention, on en décrira maintenant une forme préférée de réalisation, seulement à titre d'exemple illustratif et non limitatif, en se référent à la planche de dessins annexée, sur laquelle
la Fig. 1 représente une vue du plomb de fond selon l'invention, dans les conditions initiales;
la Fig. 2 représente une vue du plomb de la Fig. 1, dans les conditions de fermeture, ou "chargé" :
la Fig. 3 représente une vue du plomb des Fig. 1 et 2, dans les conditions d'ouverture finale.

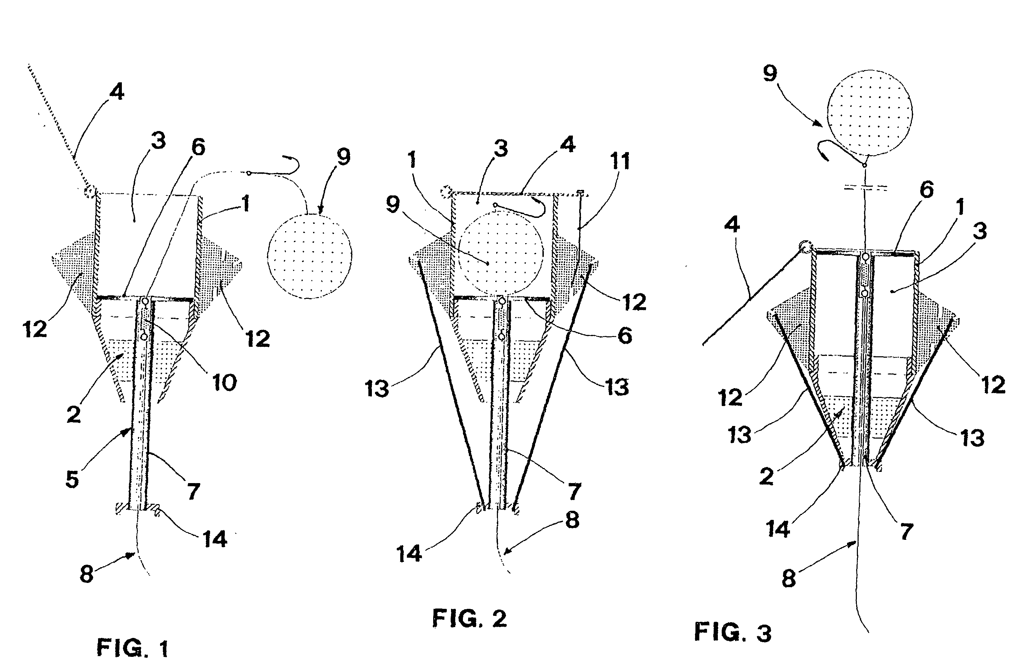

Comme on peut le voir sur la Fig. 1, le plomb selon l'invention comprend un corps lesté 1 formant récipient et muni d'un lest 2, dans lequel est ménagée une chambre 3 susceptible d'être fermée au moyen d'un couvercle 4, monté à charnière sur ledit corps.

A l'intérieur dudit corps 1, de façon coaxiale, peut coulisser un poussoir 5 comprenant un plateau 6, qui circule dans ladite chambre 3 et est muni d'une tige 7. Cette dernière, qui fait saillie sur ledit corps, est creuse intérieurement pour permettre le passage du fil de la ligne mère 8 qui s'assemble à l'hameçon-appât 9, avec interposition de l'émerillon 10.

Comme cela est visible sur la fig. 2, le chargement du plomb, pour le préparer au lancer, s'effectue en insérant tout d'abord dans la chambre 3 la partie terminale de l'hameçon-appât 9 et en fermant ensuite ladite chambre avec le couvercle 4, qui est maintenu en position de fermeture par l'accrochage à un fil hydrosoluble 11 qui s'ancre sur une fente pratiquée sur une des ailettes 12, qui font saillie sur le corps lesté 1.

Puis. on met en pression le poussoir 5 qui va comprimer la partie terminale hameçon-appât 9 contre le couvercle 4, par l'action de traction de deux fils élastiques 13 accrochés par une extrémité à l'anneau 14 placé sur la tige 7 et par l'autre extrémité sur des fentes pratiquées sur lesdites ailettes 12.

Le plomb ainsi réalisé, monté sur une canne à pêche traditionnelle, est lancé dans 1 'eau où, après l'immersion de quelques centimètres, il s'ouvre pour libérer la partie terminale hameçon-appât 9.

Spécifiquement, comme cela est visible sur la fig. 3, lorsque le plomb est immergé dans l'eau, se produit la rupture du fil hydrosoluble 11, sous l'effet de laquelle le couvercle 4, n'étant plus attaché, s'ouvre sous l'effet de l'action engendrée par le poussoir 5 mis sous tension, de sorte que le plateau 6, en coulissant vers l'extérieur de la chambre 3, provoque la sortie complète de la partie terminale hameçon-appât 9 hors ladite chambre

Le couvercle 4 peut également s'ouvrir automatiquement une fois le fil 11 rompu, notamment en prévoyant un ressort au niveau de la charnière d'ouverture de ce couvercle.

## Revendications

1. Plomb de fond à utiliser sur des cannes à pêche, qui comprend un récipient lesté (1) apte à recevoir une extrémité d'un hameçon-appât (9), des moyens (11) permettant l'ouverture automatique dudit récipient (1), une fois le plomb immergé dans l'eau étant prévus,
**caractérisé en ce qu'**il comprend un corps lesté (1) muni d'un lest (2), à l'intérieur duquel est ménagée une chambre (3) susceptible d'être fermée au moyen d'un couvercle (4), articulé sur ledit corps, cependant qu'à l'intérieur dudit corps (1), est inséré, de façon coaxiale, un poussoir (5) formé par un plateau (6) qui peut coulisser dans ladite chambre (3) et est muni d'une tige (7) faisant saillie hors dudit corps et qui est creuse intérieurement pour permettre le passage du fil d'une ligne-mère (8) qui s'assemble à l'hameçon-appât (9) avec interposition d'un émerillon (10), la préparation dudit plomb s'effectuant en insérant tout d'abord dans la chambre (3) la partie terminale de l'hameçon-appât (9) et en fermant ensuite ladite chambre avec le couvercle (4) qui est maintenu en position de fermeture par l'accrochage à un fil hydrosoluble (11) qui s'ancre sur une fente pratiquée sur une des ailettes (12), qui font saillie sur le corps lesté (1), en mettant ensuite sous pression le poussoir (5), qui va comprimer la partie terminale hameçon-appât (9) contre le couvercle (4), par l'action de traction de deux fils élastiques (13) accrochés par une extrémité à l'anneau (14) placée sur la tige (7) et par l'autre extrémité sur des fentes ménagées sur lesdites ailettes (12).

2. Plomb de fond à utiliser sur des cannes à pêche selon la revendication 1, **caractérisé par le fait que**, lorsqu'il est immergé dans l'eau, se produit la rupture du fil hydrosoluble (11) de sorte que le couvercle (4), n'étant plus attaché, et sous l'effet de l'action engendrée par le poussoir (5) sous tension, s'ouvre, de sorte que le plateau (6) en coulissant vers l'extérieur de la,chambre (3), expulse l'extrémité de l'hameçon-appât (9) hors de ladite chambre.

## Patentansprüche

1. Sinkblei zur Verwendung bei Angelruten enthaltend einen Ballastbehälter (1) zur Aufnahme eines Endes eines Angelhakenköders (9), Mittel (11), die das automatische Öffnen des Behälters (1) gestatten, sobald das Blei ins Wasser eingetaucht ist, **dadurch gekennzeichnet, dass** es einen Ballastkörper (1) mit einem Ballast (2) umfasst, in welchem eine Kammer (3) angeordnet ist, die mittels eines an dem Körper frei beweglichen Deckels (4) abschließbar ist, während in den Körper (1) eine aus einer Scheibe (6) bestehende Ausstoßvorrichtung (5) koaxial eingesetzt ist, die in der Kammer (3) gleiten kann und mit einem Gestänge (7) versehen ist, welches aus dem Körper herausragt und innen hohl ist, um das Durchführen des Fadens einer Angelschnur (8) zu ermöglichen, welche unter Zwischenschaltung eines Wirbels (10) mit dem Angelhakenköder (9) verbunden ist, wobei das Präparieren des Bleis so erfolgt, dass zuerst das Endstück des Angelhakenköders (9) in die Kammer (3) eingesetzt und anschließend die Kammer mit dem Deckel (4) verschlossen wird, welcher durch Anhängen an einen wasserlöslichen Faden (11), der in einem Schlitz eines vom Ballastkörper (1) abragenden Flügels (12) verankert ist, in Schließstellung gehalten wird, wobei anschließend die Ausstoßvorrichtung (5) unter Druck gesetzt und das Endstück des Angelhakenköders (9) durch die Zugwirkung zweier elastischer Fäden (13), die mit einem Ende in den auf dem Gestänge (7) platzierten Ring (14) und mit dem anderen Ende in Schlitze der Flügel (12) eingehängt sind, gegen den Deckel (4) angedrückt wird.

2. Sinkblei zur Verwendung bei Angelruten nach Anspruch 1, **dadurch gekennzeichnet, dass** der wasserlösliche Faden (11) nach dem Eintauchen ins Wasser zerreißt, so dass sich der nicht mehr befestigte Deckel (4) unter der Einwirkung der unter Spannung stehenden Ausstoßvorrichtung (5) öffnet, derart, dass die Scheibe (6) beim Herausgleiten aus der Kammer (3) das Endstück des Angelhakenköders (9) aus der Kammer herausstößt.

## Claims

1. Sinker to be used on fishing rods, which comprises a ballasted container (1) which can receive an end of a bait hook (9), means (11) being provided which permit automatic opening of the said container (1), once the sinker is immersed in the water, **characterised in that** it comprises a ballasted body (1) which is provided with a ballast (2), inside which there is provided a chamber (3) which can be closed by means of a cover (4) which is articulated on the said body, whereas inside the said body (1) there is inserted coaxially a thruster (5) which is formed by a plate (6) which can slide in the said chamber (3) and is provided with a rod (7) which projects from the said body and is hollow on the interior in order to permit passage of the thread of a main line (8) which is assembled to the bait hook (9) with interposition of a swivel (10), the preparation of the said sinker being carried out firstly by inserting the end part of the bait hook (9) in the chamber (3), and then closing the said chamber with the cover (4) which is maintained in the position of closure by being fastened to a hydrosoluble thread (11) which is anchored in a slot provided in one of the fins (12) which project from the ballasted body (1), and then pressurising the thruster (5) which will compress the end part of the bait hook (9) against the cover (4), by the action of traction of two resilient threads (13) which are fastened by one end to the ring (14) which is placed on the rod (7), and by the other end in slots provided in the said fins (12).

2. Sinker according to claim 1 to be used on fishing rods, **characterised in that**, when it is immersed in water, rupture of the hydrosoluble thread (11) takes place, such that the cover (4) opens, since it is no longer attached, and under the effect of the action generated by the thruster (5) under tension, such that the plate (6), by sliding towards the exterior of the chamber (3), ejects the end of the bait hook (9) from the said chamber.
